# EUROPÄISCHE PATENTSCHRIFT

(11) **EP 3 139 309 B1**
(45) Veröffentlichungstag und Bekanntmachung des Hinweises auf die Patenterteilung: **03.08.2022**
(21) Anmeldenummer: 16164601.3
(22) Anmeldetag: 11.04.2016
(51) Int. Cl.: G06K 7/10, G06V 10/25, G06V 20/66, G06V 30/224

(54) **SENSORANORDNUNG ZUR ERFASSUNG VON PROBENKÖRPERN**
SENSOR ARRANGEMENT FOR THE DETECTION OF SPECIMEN CONTAINERS
SYSTÈME DE CAPTEURS POUR LA DÉTECTION DE CONTENEURS DE SPÉCIMEN

(30) Priorität: 02.09.2015 US 201514842875
(43) Veröffentlichungstag der Anmeldung: 08.03.2017
(73) Patentinhaber: Leuze electronic GmbH + Co KG, 73277 Owen/Teck (DE)
(72) Erfinder: Montag, Ethan, Rochester, NY New York 14618 (US); Geisler, Richard, Rochester, NY New York 14620 (US)
(74) Vertreter: Ruckh, Rainer Gerhard

(56) Entgegenhaltungen:
- DE-U1-202013 102 120
- US-A1- 2006 067 572
- US-A1- 2007 286 495
- US-B1- 6 546 356
- Kenneth I Laws: "Texture Energy Measures", Image Understanding Workshop, 1 January 1979 (1979-01-01), pages 47-51, XP055659669, Los Angeles, CA, USA
- LAWS K I: "Rapid texture identification", PROCEEDINGS OF THE SOCIETY OF PHOTO-OPTICAL INSTRUMENTATION ENGINEERING,, vol. 238, 1 January 1980 (1980-01-01), pages 376-380, XP009126287, ISSN: 0361-0748

## Beschreibung

Die Erfindung betrifft eine Sensoranordnung zur Erfassung von Probenkörpern.

Derartige Probenkörper sind insbesondere von Probenröhrchen gebildet, die mit Flüssigkeit befüllt und jeweils mit einer Kappe verschlossen sind. Derartige Probenröhrchen enthalten typischerweise medizinische Proben. Ein Beispiel hierfür sind mit Blutproben befüllte Probenröhrchen, die in der Blutanalyse Verwendung finden. Die Probenröhrchen werden zu Analysezwecken automatisiert unterschiedlichen Stationen zugeführt.

Hierbei ist es erforderlich, die einzelnen Probenröhrchen zu erfassen und zu identifizieren, insbesondere um Verwechslungen und Fehlzuordnungen zu vermeiden.

Typischerweise ist auf jedem Probenröhrchen ein Code, insbesondere ein Barcode aufgebracht, der zur Probenidentifikation dient.

Um in einer automatisierten Anlage derartige Probenröhrchen zu erkennen, ist es bekannt, optische Sensoren einzusetzen, die typischerweise als Empfänger einen Bildsensor, das heißt eine Kamera aufweisen. Mit derartigen optischen Sensoren muss einerseits das Probenröhrchen selbst, beispielsweise durch eine Konturerfassung, und auch der Code des Probenröhrchens erkannt werden.

Aus der US 8, 170, 322 B2 ist ein derartiger optischer Sensor bekannt, mittels dessen Probenröhrchen vor einem retroreflektierenden Hintergrund erkannt werden. Durch den stark reflektierenden Hintergrund erscheint das Probenröhrchen als dunkles Objekt vor diesem Hintergrund. Zwar können mit dieser Anordnung auch Codes auf Probenröhrchen gelesen werden. Jedoch ist eine Objekterkennung oder Objektklassifikation in diesem Fall nur eingeschränkt möglich. Insbesondere ist keine Farberkennung möglich.

Weiter ist bei derartigen Systemen nachteilig, dass zur Objekterkennung einerseits und zur Barcodeerkennung andererseits unterschiedliche Bilder der Kamera, die bei unterschiedlichen Beleuchtungsverhältnissen aufgenommen werden, herangezogen werden müssen.

Aus der US 8, 170, 271 B2 ist ein weiterer optischer Sensor mit einer Kamera zur Erfassung von Probenröhrchen bekannt. Bei diesem System wird ein Hintergrund eingesetzt, der einen dunklen Bereich aufweist. Das Probenröhrchen wird so positioniert, dass der Barcode des Probenröhrchens vor diesem Hintergrund erkannt werden kann. Andererseits wird das Probenröhrchen vor einem retroreflektierenden Hintergrund positioniert, um die Geometrie des Probenröhrchens zu erfassen.

Aus der US 8, 248, 590 B2 ist eine Sensoranordnung mit einem optischen Sensor bekannt, bei der als Hintergrund eine ebene dunkle Fläche vorgesehen ist, die seitlich von geneigt zu dieser verlaufenden retroreflektierenden Streifen begrenzt ist. Vor der dunklen Hintergrundfläche können auf einem Probenröhrchen angebrachte Barcodes erkannt werden. Mit vom optischen Sensor emittierten Lichtstrahlen, die über die retroreflektierenden Streifen zum Probenröhrchen geführt sind, kann die Kontur des Probenröhrchens erfasst werden.

Die DE 20 2013 102 120 U1 betrifft eine Sensoranordnung mit einem Codeleser zur Erfassung von auf Probenröhrchen aufgebrachten Codes, wobei die Probenröhrchen in Halterungen gelagert sind. Ein als Reflexionslichttaster ausgebildeter Objekterfassungssensor ist vorgesehen, mittels dessen erfasst wird, ob in einer Halterung ein Probenröhrchen vorhanden ist oder nicht. Das Probenröhrchen befindet sich in einer Sollposition vor einer Hintergrundfläche, die einen Kontrollcode und eine lichtabsorbierende Fläche aufweist.

Die US 2007/0286495 A1 betrifft ein System zur Bilderfassung von Objekten. Das System weist einen Bildsensor auf. Die Objekte können mit Codes versehen sein, die bei der Bilderfassung mit erfasst werden. Zur Erhöhung des Bildkontrasts kann das Objekt vor einem reflektierenden Hintergrund angeordnet sein.

Die US 2006/0067572 A1 betrifft ein bildverarbeitendes System zur Erfassung bestimmter Attribute von Objekten. Ein zu erfassendes Objekt ist vor einem retroreflektierenden Hintergrund angeordnet.

In Kenneth I Laws: "Texture Energy Measures", Image Understanding Workshop, 1979, Seiten 47-51, Los Angeles, CA, USA sind Methoden der Bildverarbeitung zur Bestimmung von Texturen in Bildern, die mit einer Kamera aufgenommen wurden, beschrieben.

In LAWS K I: "Rapid texture identification", PROCEEDINGS OF THE SOCIETY OF PHOTO-OPTICAL INSTRUMENTATION ENGINEERING, Bd. 238, 1980, Seiten 376-380, ISSN: 0361-0748 ist eine Methode der Bildverarbeitung von Bildern einer Kamera beschrieben, die eine Klassifizierung von Pixeln eines texturierten Bildes ermöglicht.

Der Erfindung liegt die Aufgabe zugrunde, eine Sensoranordnung bereitzustellen, mittels derer mit geringem konstruktivem Aufwand eine sichere Erkennung von Probenkörpern ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung zur Erfassung von Probenröhrchen für Blutanalyse in einem Erfassungsbereich mit einem einen Bildsensor aufweisenden optischen Sensor an einem ersten Ende des Erfassungsbereichs und mit texturiertem Hintergrund an einem zweiten Ende des Erfassungsbereichs. Der texturierte Hintergrund weist eine sich von den optischen Eigenschaften des Probenröhrchens unterscheidende Musterung auf, die vom optischen Sensor in einem Bild des Bildsensors erkannt werden kann. Dabei wird ein im Erfassungsbereich vor dem texturierten Hintergrund angeordnetes Probenröhrchen mit einem darauf angebrachten Code mittels des Bildsensors erfasst. In einer Auswerteeinheit wird
- durch Filter-Algorithmen eine Abbildung des texturierten Hintergrunds aus-einem Bild des Bildsensors eliminiert und eine Abbildung des Probenröhrchens aus dem Bild des Bildsensors extrahiert
- und es werden Probenröhrchen kennzeichnende Objektfeststellungssignale und ein von Codeinformationen des Codes gebildetes Objektfeststellungssignal generiert.

Erfindungsgemäß ist der texturierte Hintergrund als optisch aktives Element in Form einer eigenen Beleuchtung ausgebildet, mittels derer die Musterung des texturierten Hintergrunds generiert wird.

Der Grundgedanke der Erfindung besteht darin, einen texturierten Hintergrund bereitzustellen, der einerseits vom optischen Sensor erfasst werden kann und andererseits von der optischen Struktur eindeutig unterscheidbar ist.

In der Auswerteeinheit kann daher aus einem mit dem Bildsensor des optischen Sensors aufgenommenen Bild der Hintergrundanteil eliminiert werden und so der Anteil des Bildes mit dem Probenröhrchen separat ausgewertet werden. Dies ermöglicht eine detaillierte Erfassung des Probenröhrchens als Ganzes sowie auch von Teilen hiervon oder von Strukturen auf den Probenröhrchen.

In der Auswerteeinheit sind Algorithmen implementiert, mittels derer in einem Bild des Bildsensors der texturierte Hintergrund vom Probenröhrchen separierbar ist.

Der texturierte Hintergrund ist so ausgebildet, dass dessen Bildbestandteile in einem Bild des Bildsensors systematisch durch geeignete Algorithmen, wie zum Beispiel Filter-Algorithmen, eliminiert werden können. Der texturierte Hintergrund ist so beschaffen, dass dessen Bild regelmäßige statische Eigenschaften aufweist, so dass dann mit geeigneten Filteralgorithmen der Hintergrundanteil des Bildes systematisch eliminiert werden kann. Erfindungsgemäß ist der texturierte Hintergrund als optisch aktives Element ausgebildet.

Der texturierte Hintergrund weist eine eigene Beleuchtung auf, mittels derer die Muster des texturierten Hintergrunds generiert werden, indem die Beleuchtung beispielsweise transparente oder opake Streifen eines Streifenmusters beleuchten.

Ein wesentlicher Vorteil der erfindungsgemäßen Sensoranordnung besteht darin, dass durch den an die zu erkennenden Probenröhrchen angepassten texturierten Hintergrund nicht nur das Probenröhrchen selbst, sondern auch auf diesem aufgebrachte Codes erfasst werden können, und zwar innerhalb eines einzigen Bildes, welches mit dem Bildsensor aufgenommen wird. Damit können Probenröhrchen sehr genau und gleichzeitig auch sehr schnell mit der erfindungsgemäßen Sensoranordnung erfasst werden.

Demzufolge können in der Auswerteeinheit anhand der Bildauswertung kumulativ oder einzeln unterschiedliche Objektfeststellungssignale generiert werden, die an die jeweiligen Applikationsanforderungen angepasst sein können.

So kann das Objektfeststellungsignal als Anwesenheitssignal ausgebildet sein, dessen Signalzustände angeben, ob sich ein Probenröhrchen im Erfassungsbereich befindet oder nicht.

Weiterhin kann das Objektfeststellungssignal von Geometrieinformationen oder Farbinformationen oder Komponenten hiervon gebildet sein.

Erfindungsgemäß ist an dem Probenröhrchen ein Code angebracht, wobei das Objektfeststellungssignal von Codeinformationen des Codes gebildet ist.

Schließlich ist das Objektfeststellungssignal ein Objektklassifikationssignal.

Gemäß einer besonders vorteilhaften Ausgestaltung der Erfindung ist das Probenröhrchen mit einer Kappe verschlossen, wobei als Objektfeststellungssignal die Höhe und/oder

Breite des Probenröhrchens, und/oder die Anwesenheit, Dimension und/oder die Farbe der Kappe ausgegeben wird.

Der optische Sensor der Sensoranordnung ist vorteilhaft derart ausgebildet, dass der Bildsensor eine matrixförmige Anordnung von lichtempfindlichen Empfangselementen aufweist.

Insbesondere ist der Bildsensor von einem CMOS- oder CCD-Sensor gebildet. Weiter vorteilhaft weist der optische Sensor eine Beleuchtungseinheit auf, mittels derer der texturierte Hintergrund angeleuchtet ist.

Dabei strahlt die Beleuchtungseinheit diffuses Licht ab.

Die Erfindung wird im Folgenden anhand der Zeichnungen erläutert. Es zeigen:
- Figur 1:: Schematische Darstellung eines Ausführungsbeispiels der erfindungsgemäßen Sensoranordnung.
- Figur 2:: Draufsicht auf den texturierten Hintergrund der Sensoranordnung gemäß Figur 1.
- Figur 3:: Draufsicht auf ein Probenröhrchen, welches mit der Sensoranordnung gemäß Figur 1 erfassbar ist.

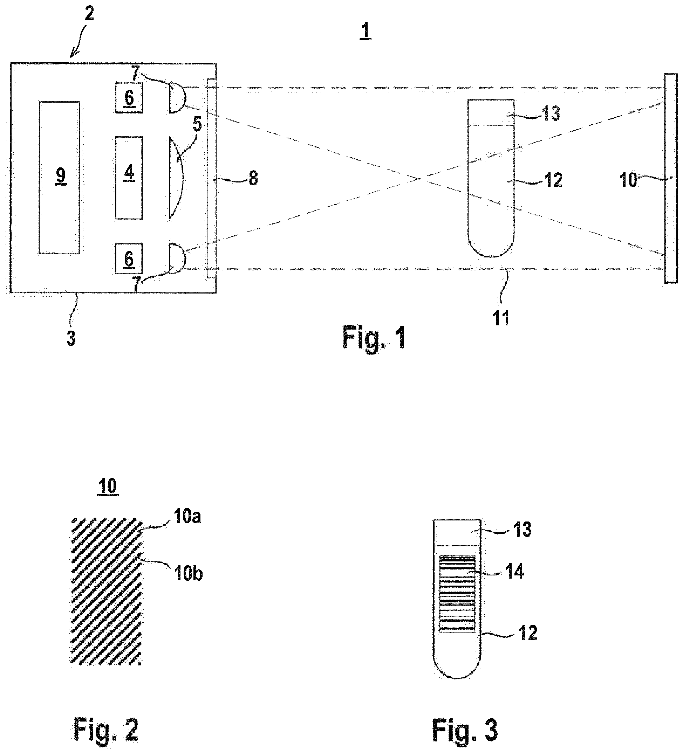

Figur 1 zeigt schematisch ein Ausführungsbeispiel der erfindungsgemäßen Sensoranordnung 1 zur Erfassung von Probenkörpern in einem Erfassungsbereich.

Die Sensoranordnung 1 umfasst einen optischen Sensor 2, dessen Komponenten in einem Gehäuse 3 angeordnet sind. Der optische Sensor 2 umfasst einen Bildsensor 4 mit einer zweidimensionalen, rechteckigen oder quadratischen Anordnung von lichtempfindlichen Empfangselementen. Der Bildsensor 4 kann als CMOS- oder CCD-Sensor ausgebildet sein. Dem Bildsensor 4 ist eine ein Objektiv bildende Empfangsoptik 5 vorgeordnet.

Der optische Sensor 2 weist weiterhin eine Beleuchtungseinheit auf, die im vorliegenden Fall von zwei Sendeeinheiten 6 gebildet ist, die beidseits des Bildsensors 4 angeordnet sind. Prinzipiell kann auch nur eine Sendeeinheit 6 vorgesehen sein. Ebenso können mehrere Sendeeinheiten 6 den Bildsensor 4 ringförmig umschließen. Die oder jede Sensoreinheit 6 besteht vorteilhaft aus einer Leuchtdiodenanordnung. Der oder jeder Sendeeinheit 6 ist eine Sendeoptik 7 zugeordnet. Mit dieser wird erreicht, dass die Beleuchtungseinheit diffuses Licht in den Erfassungsbereich abstrahlt. Der Bildsensor 4 und die Sendeeinheiten 6 sind hinter einem Fenster 8 in der Frontwand des Gehäuses 3 angeordnet.

Der optische Sensor 2 weist weiterhin eine Auswerteeinheit 9 auf, die von einem Micocontroller oder dergleichen gebildet ist. Der Bildsensor 4 und die Sendeeinheiten 6 sind an die Auswerteeinheit 9 angeschlossen. Die Auswerteeinheit 9 steuert somit die Beleuchtungseinheit. Zudem werden in der Auswerteeinheit 9 vom Bildsensor 4 generierte Bildsignale ausgewertet, wodurch Objektfeststellungssignale generiert werden, die über einen oder mehrere nicht dargestellte Ausgänge ausgegeben werden können.

Der optische Sensor 2 befindet sich an einem Rand des Erfassungsbereichs. Am anderen Ende des Erfassungsbereichs befindet sich ein texturierter Hintergrund 10 (Figur 1). Wie aus Figur 2 ersichtlich, weist der texturierte Hintergrund 10 eine Oberfläche mit einer regelmäßigen Anordnung von hellen Streifen 10a und dunklen Streifen 10b auf. Die Streifen 10a ,10b verlaufen 45° geneigt zur Horizontalen. Im vorliegenden Fall ist zur Ausbildung des texturierten Hintergrunds 10 das Streifenmuster auf einen Träger aufgebracht.

Die Beleuchtungseinheit des optischen Sensors 2 emittiert Lichtstrahlen 11 derart, dass damit der texturierte Hintergrund 10 vollständig ausgeleuchtet wird.

Der zu detektierende Probenkörper befindet sich im Erfassungsbereich zwischen dem optischen Sensor und dem texturierten Hintergrund 10. Die Längsachse des Probenkörpers ist dabei in vertikaler Richtung orientiert. Die Streifen 10a, 10b des texturierten Hintergrunds 10 verlaufen somit um 45° geneigt zur Längsachse des Probenkörpers.

Der Probenkörper besteht im vorliegenden Fall aus einem Probenröhrchen 12, das an seiner offenen Oberseite mit einer Kappe 13 definierter Farbe verschlossen ist. Im Probenröhrchen 12 befindet sich eine zu analysierende Flüssigkeit, insbesondere eine Blutprobe. Wie Figur 3 zeigt, ist auf dem Probenröhrchen 12 ein Code 14 in Form eines Barcodes aufgebracht. Die Codesegmente des Barcodes verlaufen in horizontaler Richtung und damit um 45° geneigt zu den Streifen 10a, 10b des texturierten Hintergrunds 10.

Mit dem optischen Sensor 2 wird der Probenkörper vor dem texturierten Hintergrund 10 erfasst, das heißt in einem mit dem Bildsensor 4 generierten Bild ist der Probenkörper mit dem texturierten Hintergrund 10 aufgenommen.

Das Streifenmuster des texturierten Hintergrunds 10 ist so ausgebildet, dass es sich einerseits von allen Strukturen des Probenkörpers eindeutig unterscheidet und andererseits vom optischen Sensor 2 aufgelöst, das heißt in einem Bild des Bildsensors 4 erkannt werden kann.

Durch in der Auswerteeinheit 9 integrierte Algorithmen kann der Hintergrundanteil des texturierten Hintergrunds 10 aus einem Bild des Bildsensors 4 eliminiert werden, so dass allein der Bildanteil des Probenkörpers extrahiert wird. Damit können aus einem Bild des Bildsensors 4 in der Auswerteeinheit 9 alle relevanten Informationen des Probenkörpers extrahiert werden. Im vorliegenden Fall gehören hierzu die Codeinformationen im Barcode, die Breite und Höhe des Probenröhrchens 12, die Anwesenheitsprüfung, ob eine Kappe 13 auf dem Probenröhrchen 12 vorhanden ist, die Dimension und Farbe der Kappe 13. Weiterhin ist eine Erkennung des Typs der Kappe 13 und damit eine Objektklassifikation möglich. Die so gewonnenen Informationen können einzeln oder kumulativ als Objektfeststellungssignal vom optischen Sensor 2 ausgegeben werden.

Im Folgenden wird eine typische Bildauswertung anhand von in der Auswerteeinheit 9 implementierten Algorithmen erläutert.

Zunächst erfolgt eine Filterung eines mit dem Bildsensor 4 aufgenommenen Bildes mittels eines eindimensionalen Filters gemäß der Methode von Laws, beschrieben in:
Laws, K. (1979) Texture Energy Measures. In Proceedings: Image Understanding Workshop, DARPA, Los Angeles, CA, USA, 47-51.

Laws, K. (1980) Rapid Texture Identification. In Proceedings of SPIE - Society of Photo-Optical Instrumentation Engineers - Image Processing for Missile Guidance, San Diego, CA, USA, July 29 - August 1, vol. 238:367-380.

Bei dieser Filterung wird die reguläre statische Struktur des Hintergrundanteils im Bild ausgenutzt, indem der Filter eine Anpassung an dieses Hintergrundmuster vornimmt. Die Struktur des Probenkörpers passt nicht zu diesem Hintergrundanteil und kann so einfach und schnell vom Hintergrundanteil des Bildes separiert werden.

Im dem so gefilterten Bild erscheinen die Bildanteile des Hintergrundanteils als weiße Flächen.

Mit einer anschließenden Median-Filterung werden Rausch-Anteile im Bild eliminiert.

Anschließend erfolgt eine Schwellwertbewertung der Pixel des so gefilterten Bildes nach der Methode von Otsu, beschrieben in:
Otsu, N. (1979). A threshold selection method from gray-level histograms. IEEE Trans. Sys., Man., Cyber. 9 (1): 62-66:
Mit dieser Schwellwertbewertung werden dunkle Pixel von hellen Pixeln getrennt, das heißt es wird ein binarisiertes Bild erhalten, in welchem die dunklen Pixel die Kontur des Probenkörpers sind.

Anhand dieses binarisierten Bildes erfolgt eine BLOB- (Binarized large object) Analyse, die beispielsweise in dem Artikel "Development of FPGA-based realtime BLOB-analysis circuit", J. Trein. A. Schwarzbacher, B. Hoppe, K.-H. Noffz, T. Trenschel in ISSC 2007 beschrieben. Bei dieser BLOB-Analyse erfolgt eine Bildverarbeitung derart, dass Objekte oder Objektmerkmale von einem Hintergrund oder anderen Objekten separiert werden. Ein BLOB oder ein Objekt ist dabei durch einen Satz von Pixeln des Bildes definiert, die untereinander zusammenhängen und sich von einem Hintergrund unterscheiden.

Die mit dieser BLOB-Analyse erhaltenden BLOBs enthalten die Informationen über den zu detektierenden Probenkörper. Anhand von Farbmessungen erfolgt eine Farbanalyse des Probenkörpers, insbesondere um die Farbe der Kappe 13 zu bestimmen.

Weiterhin werden anhand der BLOBs die Geometriedaten des Probenröhrchens 12 und der Kappe 13 bestimmt.

Schließlich wird mit einer ROI-(region of interest) Methode der Barcode des Probenröhrchens 12 erfasst. Dann wird die im Barcode enthaltene Codeinformation dekodiert.

### Bezugszeichenliste

- (1): Sensoranordnung
- (2): Optischer Sensor
- (3): Gehäuse
- (4): Bildsensor
- (5): Empfangsoptik
- (6): Sendeeinheit
- (7): Sendeoptik
- (8): Fenster
- (9): Auswerteeinheit
- (10): texturierter Hintergrund
- (10a): helle Streifen
- (10b): dunkle Streifen
- (11): Lichtstrahlen
- (12): Probenröhrchen
- (13): Kappe
- (14): Code

## Patentansprüche

1. Sensoranordnung (1) zur Erfassung von Probenröhrchen (12) für Blutanalyse in einem Erfassungsbereich mit einem einen Bildsensor (4) aufweisenden optischen Sensor (2) an einem ersten Ende des Erfassungsbereichs und mit texturiertem Hintergrund (10) an einem zweiten Ende des Erfassungsbereichs, wobei der texturierte Hintergrund (10) eine sich von den optischen Eigenschaften des Probenröhrchens (12) unterscheidende Musterung aufweist, die vom optischen Sensor (2) in einem Bild des Bildsensors (4) erkannt werden kann und wobei ein im Erfassungsbereich vor dem texturierten Hintergrund (10) angeordnetes_Probenröhrchen (12) mit einem darauf angebrachten Code mittels des Bildsensors (4) erfasst wird, und wobei in einer Auswerteeinheit (9)
• durch Filter-Algorithmen eine Abbildung des texturierten Hintergrunds aus einem Bild des Bildsensors (4) eliminiert wird und eine Abbildung des Probenröhrchens (12) aus dem Bild des Bildsensors (4) extrahiert wird; und
• Probenröhrchen (12) kennzeichnende Objektfeststellungssignale und ein von Codeinformationen des Codes gebildetes Objektfeststellungssignal generiert werden,
**dadurch gekennzeichnet, dass** der texturierte Hintergrund (10) als optisch aktives Element in Form einer eigenen Beleuchtung ausgebildet ist, mittels derer die Musterung des texturierten Hintergrunds generiert wird.

2. Sensoranordnung nach Anspruch 1, **dadurch gekennzeichnet, dass** das Objektfeststellungsignal als Anwesenheitssignal ausgebildet ist, dessen Signalzustände angeben, ob sich ein Probenröhrchen (12) im Erfassungsbereich befindet oder nicht.

3. Sensoranordnung nach einem der Ansprüche 1 oder 2, **dadurch gekennzeichnet, dass** das Objektfeststellungssignal von Geometrieinformationen oder Farbinformationen des Probenröhrchens (12) oder Komponenten hiervon gebildet ist.

4. Sensoranordnung nach einem der Ansprüche 1 bis 3, **dadurch gekennzeichnet, dass** das Objektfeststellungssignal ein Objektklassifikationssignal ist.

5. Sensoranordnung nach einem der Ansprüche 1 bis 3, **dadurch gekennzeichnet, dass** das Probenröhrchen (12) mit einer Kappe (13) verschlossen ist, wobei als Objektfeststellungssignal die Höhe und/oder Breite des Probenröhrchens (12), und/oder die Anwesenheit, Dimension und/oder Farbe der Kappe (13) ausgegeben wird.

6. Sensoranordnung nach einem der Ansprüche 1 bis 5, **dadurch gekennzeichnet, dass** der Bildsensor (4) eine matrixförmige Anordnung von lichtempfindlichen Empfangselementen aufweist.

7. Sensoranordnung nach Anspruch 6, **dadurch gekennzeichnet, dass** der Bildsensor (4) von einem CMOS- oder CCD-Sensor gebildet ist.

## Claims

1. A sensor arrangement (1) for detecting specimen tubes (12) for blood analysis in a detection area with an optical sensor (2) having an image sensor (4) at a first end of the detection area and with a textured background (10) at a second end of the detection area, wherein the textured background (10) has a patterning which differs from the optical properties of the specimen tube (12), which can be detected by the optical sensor (2) in an image of the image sensor (4) and wherein a specimen tube (12) arranged in the detection region in front of the textured background (10) with a code applied thereto is detected by means of the image sensor (4) and wherein in an evaluation unit (9)
• filter algorithms eliminate an image of the textured background from an image of the image sensor (4) and extract an image of the specimen tube (12) from the image of the image sensor (4); and
• object detection signals identifying specimen tubes (12) and an object detection signal formed by code information of the code are generated,
**characterised in that** the textured background (10) is formed as an optically active element in the form of its own illumination by means of which the patterning of the textured background is generated.

2. A sensor arrangement according to claim 1, **characterised in that** the object detection signal is designed as a presence signal whose signal states indicate whether or not a specimen tube (12) is located in the detection range.

3. A sensor arrangement according to one of claims 1 or 2, **characterised in that** the object detection signal is formed by geometry information or colour information of the specimen tube (12) or components thereof.

4. A sensor arrangement according to one of claims 1 to 3, **characterised in that** the object detection signal is an object classification signal.

5. A sensor arrangement according to one of claims 1 to 3, **characterised in that** the specimen tube (12) is closed with a cap (13), wherein the height and/or width of the specimen tube (12), and/or the presence, dimension and/or colour of the cap (13) is output as an object detection signal.

6. A sensor arrangement according to one of claims 1 to 5, **characterised in that** the image sensor (4) has a matrix-shaped arrangement of light-sensitive receiving elements.

7. A sensor arrangement according to claim 6, **characterised in that** the image sensor (4) is formed by a CMOS or CCD sensor.

## Revendications

1. Système de capteurs (1) pour la détection de tubes de spécimen (12) pour l'analyse du sang dans une zone de détection avec un capteur optique (2) présentant un capteur d'images (4) à une première extrémité de la zone de détection et avec un fond texturé (10) à une seconde extrémité de la zone de détection, le fond texturé (10) présentant un motif qui diffère des propriétés optiques du tube de spécimen (12), qui peut être détecté par le capteur optique (2) dans une image du capteur d'image (4) et dans lequel un tube de spécimen (12) disposé dans la zone de détection devant le fond texturé (10) avec un code appliqué sur celui-ci est détecté au moyen du capteur d'image (4) et dans lequel, dans une unité d'évaluation (9),
• des algorithmes de filtrage éliminent une image du fond texturé d'une image du capteur d'image (4) et extraient une image du tube de spécimen (12) de l'image du capteur d'image (4 ; et
• des signaux de détection d'objet identifiant des tubes de spécimen (12) et un signal de détection d'objet formé par des informations de code du code sont générés,
**caractérisé en ce que** l'arrière-plan texturé (10) est formé comme un élément optiquement actif sous la forme de sa propre illumination au moyen de laquelle le motif de l'arrière-plan texturé est généré.

2. Système de capteurs selon la revendication 1, **caractérisé en ce que** le signal de détection d'objet est conçu comme un signal de présence dont les états de signal indiquent si un tube de spécimen (12) se trouve ou non dans la zone de détection.

3. Système de capteurs selon l'une des revendications 1 ou 2, **caractérisé en ce que** le signal de détection d'objet est formé par des informations de géométrie ou des informations de couleur du tube de spécimen (12) ou de ses composants.

4. Système de capteurs selon l'une des revendications 1 à 3, **caractérisé en ce que** le signal de détection d'objet est un signal de classification d'objet.

5. Système de capteurs selon l'une des revendications 1 à 3, **caractérisé en ce que** le tube de spécimen (12) est fermé par un capuchon (13), la hauteur et/ou la largeur du tube de spécimen (12), et/ou la présence, la dimension et/ou la couleur du capuchon (13) étant émises comme signal de détection d'objet.

6. Système de capteurs selon l'une des revendications 1 à 5, **caractérisé en ce que** le capteur d'image (4) présente un système en forme de matrice d'éléments récepteurs sensibles à la lumière.

7. Système de capteurs selon la revendication 6, **caractérisé en ce que** le capteur d'image (4) est formé par un capteur CMOS ou CCD.
